Europäisches Patentamt

European Patent Office

Office européen des brevets

(19)

(11) Veröffentlichungsnummer: **0 266 709**
**A2**

(12) # EUROPÄISCHE PATENTANMELDUNG

(21) Anmeldenummer: 87116023.0

(51) Int. Cl.4: **B29C 45/17**

(22) Anmeldetag: **31.10.87**

(30) Priorität: **06.11.86 DE 3637897**

(43) Veröffentlichungstag der Anmeldung:
**11.05.88 Patentblatt 88/19**

(84) Benannte Vertragsstaaten:
**AT BE CH FR GB IT LI LU NL SE**

(71) Anmelder: **Krauss-Maffei Aktiengesellschaft**
**Krauss-Maffei-Strasse 2**
**D-8000 München 50(DE)**

(72) Erfinder: **Weiss, Gerhard, Dipl.-Ing. (FH)**
**Euschertsfurth 260**
**D-8351 Lalling(DE)**
Erfinder: **Laberer, Heribert, Dipl.-Ing. (FH)**
**Sipplingerstrasse 8**
**D-8000 München 60(DE)**
Erfinder: **Holzinger, Reinhard**
**Johans-Langmantelstrasse 7**
**D-8027 Neuried(DE)**

(54) **Kupplungseinrichtung an einer Spritzgiessmaschine zum Ankuppeln der Schneckenwelle.**

(57) Um das Wellenende der Schnecke einer Plastifiziervorrichtung möglichst vollautomatisch mit der Antriebswelle einer Spritzvorrichtung kuppeln zu können, ist die mittels der Antriebswelle axial verschiebbare Kupplung 19 mit federbelasteten Klemmbacken 33 versehen, die mittels relativ zur Kupplung 19 bewegbaren Spreizkeilen 43 aufgespreizt werden können und beim Wegziehen der Spreizkeile 43 selbsttätig hinter einer Ringschulter 18 des Wellenendes 15 einrasten.

FIG. 3a

EP 0 266 709 A2

## Kupplungseinrichtung an einer Spritzgießmaschine zum Ankuppeln der Schneckenwelle

Die Erfindung betrifft eine Kupplungseinrichtung an einer Spritzgießmaschine von der im Oberbegriff des Anspruchs 1 angegebenen Art. Die Plastifiziereinheit einer Spritzgießmaschine, bestehend aus dem Massezylinder mit Heizund Kühleinrichtungen und der im Zylinder dreh-und verschiebbaren Schnecke, wird in der Regel herausnehmbar bzw. answechselbar ausgebildet, um für unterschiedliche Werkstoffe und/oder Spritzgießanwendungen verschiedene Plastifiziereinheiten einsetzen zu können. Zu diesem Zweck muß das Schaftende der Schnecke mit einer von der Antriebseinheit zur Drehung und Axialverschiebung antreibbaren Antriebswelle lösbar gekoppelt werden. Bei bisher üblichen Spritzießmaschinen erfolgt dieses Ankuppeln von Hand. Die gesamte Plastifiziereinheit wird in Axialrichtung so verschoben, daß das mit Längsrippen versehene Schaftende der Schnecke in eine mit Längsnuten versehene Aufnahme der Kupplung eingesteckt wird. Anschließend werden an der Kupplung vorgesehene Backen mittels Schrauben festgezogen, so daß sie eine Ringschulter des Wellenschaftes hintergreifen und die Schneckenwelle an der Kupplung in Axialrichtung festlegen. Beim Entkuppeln erfolgen diese Vorgänge in umgekehrter Reihenfolge.

Dieses Ein-bzw. Auskuppeln von Hand ist ein mühsamer Vorgang, der viel Zeit in Anspruch nimmt. Es ist auch schwierig bzw. auf jeden Fall problematisch, ihn bei heißer Plastifiziervorrichtung durchzuführen. Die Plastifiziervorrichtung kann deshalb erst nach dem Einsetzen aufgeheizt bzw. muß vor dem Herausnehmen abgekühlt werden.

Der Erfindung liegt die Aufgabe zugrunde, eine Kupplungseinrichtung der genannten Art zu - schaffen, die ein besonders einfaches und vollständig automatisierbares Ein-bzw. Auskuppeln ermöglicht.

Die Lösung dieser Aufgabe ist im Anspruch 1 angegeben. Die Unteransprüche geben weitere bevorzugte Ausgestaltungen der Erfindung an.

Ein Ausführungsform der Erfindung wird anhand der Zeichnungen näher erläutert. Es zeigt:

Fig. 1 eine schematische Prinzipskizze der Spritzvorrichtung;

Fig. 2 einen Längsschnitt durch die Kupplungseinrichtung gemäß einer Ausführungsform der Erfindung;

Fig. 3 eine schematische Darstellung der Kupplungseinrichtung im Längsschnitt (A) bzw. Querschnitt (B) in der gekuppelten Stellung;

Fig. 4 einen Längsschnitt (a) bzw. Querschnitt (b) der Kupplungseinrichtung in Kupplungsfreigabestellung;

Fig. 5 einen schematischen Längsschnitt der Kupplungseinrichtung in entkuppelter Stellung.

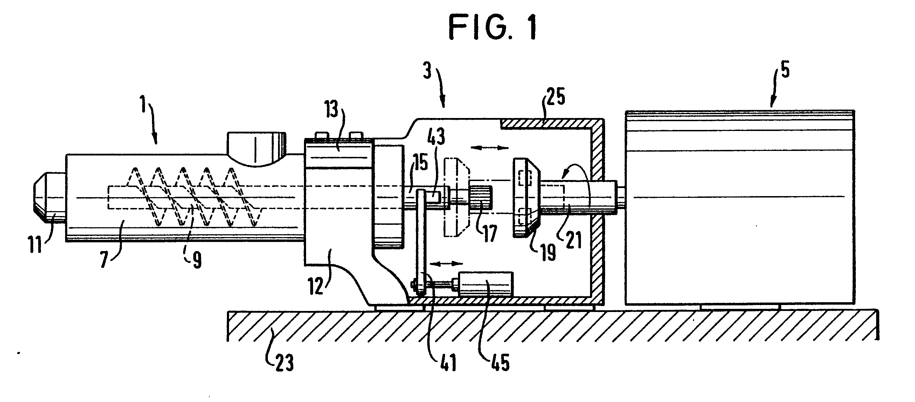

Gemäß der schematischen Prinzipskizze von Fig. 1 besteht die Spritzvorrichtung aus der Plastifiziereinheit 1, der Kupplungseinheit 3 und einer Antriebseinheit 5. Die Plastifiziereinheit 1 besteht aus dem Schneckenzylinder 7, einer darin drehund verschiebbar angeordneten Plastifizierschnecke 9 und einem Spritzkopf 11, um den plastifizierten Kunststoff in eine (nicht dargestellte) links anschließende Form zu spritzen. Der Schneckenzylinder 7 is in eine Aufnahme 12 der Kupplungseinrichtung 3 eingesetzt und mittels einer Spannvorrichtung 13 festgespannt. Die Ausgestaltung der Spannvorrichtung ist vorzugsweise derart, daß der Schnekkenzylinder vollautomatisch mittels druckmittelbetätigter Spannvorrichtungen in Axialrichtung und in queraxialer Richtung festgespannt wird. Im übrigen ist jedoch die Aus bildung der Spannvorrichtung 13 beliebig und nicht Gegenstand der vorliegenden Erfindung. Die Welle 15 der Extruderschnecke 9 ragt aus dem Zylinder 7 heraus und trägt ein mit Längsrippen versehenes Schaftende 17. Dieses ist mit einer Kupplung 19 kuppelbar, die auf einer Antriebswelle 21 sitzt, die mittels einer Antriebseinheit 5 zur Drehung und zur Axialverschiebung antreibbar ist. In bekannter Weise wird durch Drehen der Schnecke 9 der Kunststoff plastifiziert und anschließend durch einen axialen Vorwärtsschub der Schnecke 9 extrudiert. die Ankupplung des Schaftendes 17 an die Kupplung 19 muß so beschaffen sein, daß sowohl die erforderlichen Drehmomente als auch die hohen Axialschub- und -zugkräfte übertragen werden können.

Die gesamte Kupplungseinheit 3 ist auf einer Basis 23 mittels (nicht dargestellter) Führungs-und Stellmittel axial verschiebbar, um die Plastifiziereinheit 1 mit dem Spritzkopf 11 an die in einer Schließeinheit eingespannte Spritzgußform heranbewegen zu können.

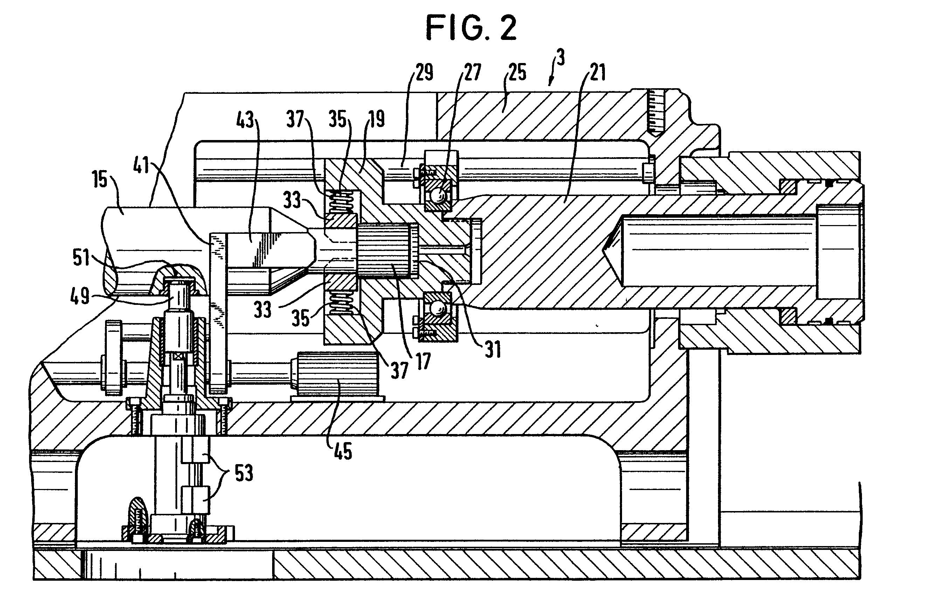

Die Details der Kupplungseinrichtung sind in Fig. 2 dargestellt. Die Kupplung 19 ist mit der Antriebswelle 21 fest verbunden. Die Antriebswelle 21 ist durch das Gehäuse 25 der Kupplungseinheit hindurchgeführt und durch nicht näher dargestellte Mittel mit der Antriebseinheit 5 verbunden. Antriebswelle 21 und Kupplung 19 sind im Gehäuse 25 durch ein zusätzliches Radiallager 27 gelagert, welches an Führungsstangen 29 axial verschiebbar geführt ist. Die Kupplung 19 hat eine längsgenutete Aufnahmebohrung 31 für das längsgerippte Schaftende 17 der Schneckenwelle 15. Daran anschließend hat die Kupplung eine der Welle 15 zugewandte Ausnehmung in der Klemmbacken 33 in queraxialer Richtung an Führungsstiften 35 verschiebbar gelagert sind. Schraubenfedern 37, welche die Führungsstifte 35 umgeben, drücken die Klemmbacken 33 in Richtung auf die Achse der Welle 15, so daß sie hinter eine dem Schaftende 17 vorgelagerte Ringschulter der Welle 15 einrasten können.

Am Gehäuse 25 der Kupplungseinheit 3 ist eine Halteplatte 41 verschiebbar geführt, welche beiderseits der Schneckenwelle 15 angeordnete Spreizkeile 43 trägt. Mittels einer hydraulischen oder pneumatischen Stellvorrichtung 45 kann die Tragplatte 41 in Axialrichtung verschoben werden, um die Spreizkeile 43 zwischen die Kupplungsbacken 33 bzw. aus ihnen heraus zu bewegen.

Am Gehäuse 25 der Kupplungseinrichtung 3 ist ferner ein Tast-und Blockierstift 49 quer zur Achse bewegbar gelagert, der mittels einer Feder oder einer Stellvorrichtung gegen die Welle 15 angedrückt werden kann und in eine an der Welle 15 ausgebildete Vertiefung 51 eingreift, wenn die Welle 15 in die für das Kuppeln korrekte Axialstellung und Winkelstellung gebracht worden ist. Mittels Sensoren 53 wird festgestellt, ob der Tast-und Blockierstift sich in der vorgeschobenen Position befindet. Nur dann wird der Vorschubantrieb der Antriebseinheit 5 für das Einkuppeln freigegeben.

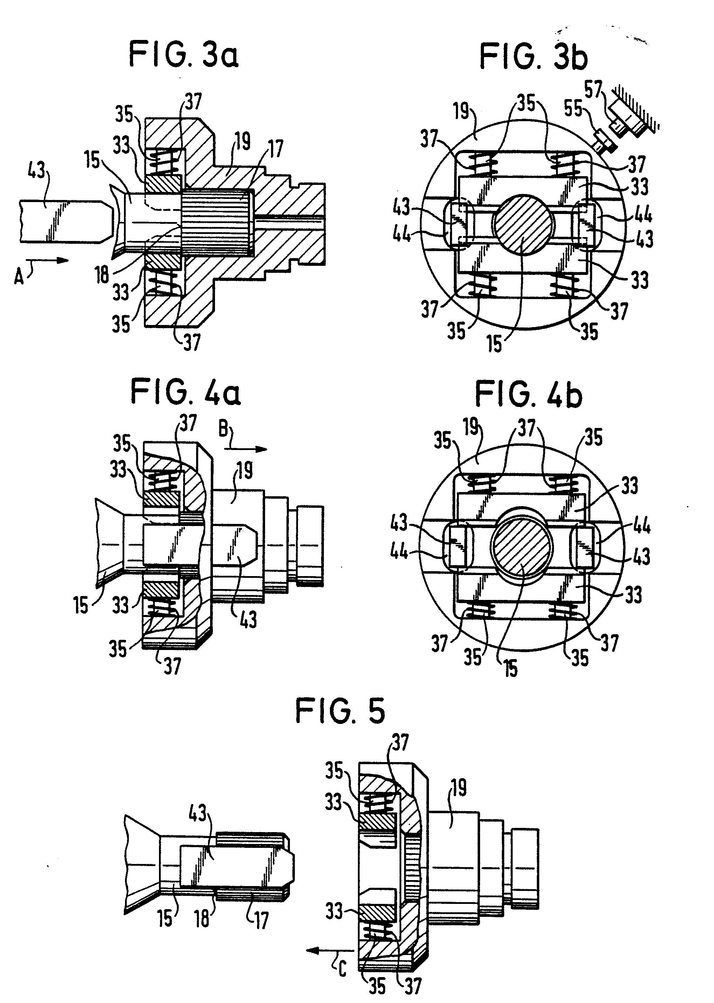

Die Arbeitsweise der Kupplungseinrichtung wird anhand von Fig. 3-5 für das Beispiel des Entkuppelns erläutert. In Fig. 3 ist das Schaftende 17 der Welle 15 in die Kupplung 19 voll eingesteckt und die Backen 33 sind hinter die vom Schaftende 17 gebildete Ringschulter 18 eingerastet. Die Spreizkeile 43 befinden sich im Abstand von der Kupplung 19.

Zum Entkuppeln werden mittels der Stellvorrichtung 25 und der Tragplatte 41 die Spreizkeile 43 nach rechts (Pfeil A) bewegt, so daß sie zwischen die Kupplungsbacken 33 eintreten und mittels der zusammenwirkenden Schrägflächen an den Spreizkeilen 43 und den Kupplungsbacken 33 die Kupplungsbacken auseinanderspreizen, so daß diese die Ringschulter 18 freigeben, wie in Fig. 4 dargestellt. Das Gehäuse der Kupplung 19 kann Durchtrittsöffnungen 44 aufweisen, die einen Durchtritt der Spreizkeil 43 ermöglichen. Die Kupplung 19 befindet sich nun in der Kupplungsfreigabestellung und kann durch Betätigen des Schubantriebs in der Antriebseinheit 5 mittels der Antriebswelle 21 nach rechts vom Schaftende 17 weggezogen werden (Pfeil B), um dieses freizugeben, wie in Fig. 5 dargestellt.

Das Einkuppeln geht in umgekehrter Reihenfolge vor sich. Bevor jedoch, ausgehend von der entkuppelten Stellung nach Fig. 5, die Kupplungsbewegung (Pfeil C) beginnt, muß zunächst die korrekte relative Lage von Schaftende 17 und Kupplung 19 sichergestellt sein. Dies geschieht einerseits mit Hilfe des anhand von Fig. 2 beschriebenen Tast-und Blockierstifts 49 und der Sensoren 53. Andererseits trägt die Kupplung 19, wie in Fig. 3b schematisch dargestellt, einen Betätiger 55 für einen berührungsfreien Schalter 57. Der Schalter 57 wird nur dann betätigt, wenn sich die Kupplung 19 in einer korrekten Winkelposition befindet, in der ihre längs verlaufenden Nuten mit den entsprechenden Rippen des Schaftendes 17 der Welle 15 fluchten. Wenn entsprechende Freigabesignale von den Sensoren 53 und dem Schalter 57 vorliegen, kann die Antriebseinheit 5 so angesteuert werden, daß sie die Kupplung 19 aus der Stellung von Fig. 5 nach links be wegt und dadurch auf das Schaftende 17 aufschiebt, wobei gleichzeitig die Kupplungsbacken 33 von den in Wirkposition gefahrenen Spreizkeilen 43 aufgespreizt werden., so daß die Stellung nach Fig. 4 erreicht wird. Anschließend werden mittels der Stellvorrichtung 45 die Spreizkeile 43 nach links aus der Kupplung 19 herausbewegt, so daß die Kupplungsbacken 33 durch ihre Federbelastung hinter die Ringschulter 18 des Schaftes 17 einrasten können.

Wie man aus Fig. 2 erkennt, ist das Gehäuse 25 der Kupplungseinheit 3 im linken Bereich, d.h., soweit sich die Welle 15 mit Schaftende 17 erstreckt, nach oben hin offen. Bei zurückgezogener Kupplung 19 (entsprechend der Stellung nach Fig. 5) kann deshalb die Schneckenwelle 15 nach oben hin aus dem Gehäuse 25 herausgehoben werden. Das Herausnehmen bzw. Einsetzen der gesamten Plastifiziereinheit 1 kann deshalb mit einer rein queraxialen Hebe-bzw. Senkbewegung durchgeführt werden. Axialverschiebungen sind, aufgrund des erfindungsgemäßen Kupplungsvorgangs nicht erforderlich.

**Ansprüche**

1. Kupplungseinrichtung an einer Spritzgießmaschine zum Ankuppeln des Wellenschaftes der Schneckenwelle einer Plastifiziereinheit an eine von einer Antriebseinheit zu Dreh-und Schubbewegung antreibbare Antriebswelle mit einer an der Antriebswelle angeordneten Kupplung, die eine längsgenutete Aufnahme zum Eingriff mit dem längsgerippten Schaftende der Schneckenwelle sowie queraxial bewegbare Backen zum Hintergreifen einer Schulter des Schaftendes aufweist, dadurch **gekennzeichnet,** daß die Backen (3) in die Eingriffsstellung federbelastet sind und daß eine relativ zur Kupplung (19) in Achsrichtung verschiebbare Spreizvorrichtung (43) zum Offenhalten der Backen vorgesehen ist.

2. Kupplungseinrichtung nach Anspruch 1, dadurch **gekennzeichnet,** daß die Spreizvorrichtung einen Träger (41) mit gegen die Kupplung gerichteten Spreizkeilen (43) aufweist und mittels einer Stellvorrichtung (45) aus einer Arbeitsstellung, in der die Spreizkeile sich beiderseits des Schaftendes (17) befinden, in eine unwirksame Stellung, in der die Spreizkeile gegenüber dem Schaftende (17) in Axialrichtung zurückgezogen sind, verschiebbar ist.

3. Kupplungseinrichtung nach Anspruch 1, dadurch **gekennzeichnet**, daß sie eine Einrichtung zum Einspannen oder Befestigen der Plastifiziereinheit (1) in einer vorgegebenen axialen Position aufweist, und daß die Kupplung (19) aus einer zurückgezogenen Stellung, in der sie im Abstand vom Schaftende (17) steht, mittels der Antriebswelle (21) in Axialrichtung auf das Schaftende (17) aufschiebbar ist.

4. Kupplungseinrichtung nach Anspruch 1, dadurch **gekennzeichnet**, daß ein Positionssensor (49) zum Erfassen und ggf. Fixieren einer axialen Sollstellung und/oder Winkelsollstellung des Wellenendes (15) vorgesehen ist.

5. Kupplungseinrichtung nach Anspruch 1, dadurch **gekennzeichnet**, daß ein Positionssensor (55, 57) zum Erfassen einer Winkelsollstellung der Kupplung (19) vorgesehen ist.

6. Kupplungseinrichtung nach Anspruch 4 und 5, dadurch **gekennzeichnet**, daß die Positionssensoren (49, 53; 55, 57) den Vorschubantrieb der Antriebseinheit (5) sperren bzw. freigeben.

7. Kupplungseinrichtung nach Anspruch 1, dadurch **gekennzeichnet**, daß die Kupplungseinrichtung bei zurückgezogener Kupplung (19) auf einer Seite, insbesondere der Oberseite derart offen ist, daß die Plastifiziereinheit mit der Welle (15) mit rein queraxialer Bewegung in die Kupplungseinrichtung (3) hinein bzw. aus ihr hinaus bewegt werden kann.

8. Verfahren zum Kuppeln des Schaftendes einer Extruderwelle mit einer Antriebswelle, einer Spritzgießvorrichtung mittels einer Kupplungseinrichtung nach einem der Ansprüche 1-7, **gekennzeichnet** durch folgende Arbeitsschritte:
bei in Axialrichtung zurückgezogener Kupplung (19) Einlegen der Plastifiziereinheit (1) in die Kupplungseinrichtung (3) mit einer im wesentlichen queraxialen Bewegung;
Feststellen und ggf. Fixieren der axialen und winkelmäßigen Sollposition des Wellenendes (15);
Feststellen der winkelmäßigen Sollposition der Kupplung (19);
Bewegen der Spreizkeile (43) in eine querab vom Schaftende (17) befindliche Position;
axiales Vorschieben der Kupplung (19) mittels der Antriebswelle (21), um die Kupplung auf das Schaftende (17) und die Spreizkeile (43) aufzuschieben;
Herausziehen der Spreizkeile (43) aus der Kupplung;
ggf. Freigabe der Fixierung des Wellenendes (15) in der Sollposition.

# FIG. 1

0 266 709

Krauss-Maffei AG
8000 München  50
TK 269 a

# FIG. 2

0 266 709

Krauss—Maffei AG
8000 München 50
TK 269 a

# FIG. 3a

# FIG. 3b

# FIG. 4a

# FIG. 4b

# FIG. 5

Krauss-Maffei AG
8000 München   50
TK 269 a